# EUROPEAN PATENT SPECIFICATION

(11) **EP 1 842 328 B1**
(45) Date of publication and mention of the grant of the patent: **05.09.2018**
(21) Application number: 06718758.3
(22) Date of filing: 19.01.2006
(51) Int. Cl.: H04L 12/10

(54) **PROVIDING DATA COMMUNICATION BETWEEN POWER SUPPLY DEVICE AND POWERED DEVICE IN SYSTEM FOR SUPPLYING POWER OVER COMMUNICATION LINK**
BEREITSTELLUNG VON DATENKOMMUNIKATION ZWISCHEN EINER STROMVERSORGUNGSVORRICHTUNG UND EINER STROMGETRIEBENEN VORRICHTUNG IN EINEM SYSTEM ZUR BEREITSTELLUNG VON LEISTUNG ÜBER EINE KOMMUNIKATIONSVERBINDUNG
COMMUNICATION DE DONNÉES ENTRE UN DISPOSITIF D'ALIMENTATION EN ÉNERGIE ET UN DISPOSITIF ÉLECTRIQUE DANS UN SYSTÈME D'ALIMENTATION EN ÉNERGIE FAISANT APPEL À UNE LIAISON DE COMMUNICATION

(30) Priority: 25.01.2005 US 646509 P; 15.11.2005 US 273255
(43) Date of publication of application: 10.10.2007
(73) Proprietor: Linear Technology Corporation, Milpitas, CA 95035-7417 (US)
(72) Inventor: DWELLEY, David, McLean, D-81479 Munchen (DE); STINEMAN, John, Arthur, Carpinteria, California 93013 (US)
(74) Representative: Müller-Boré & Partner Patentanwälte PartG mbB
(86) International application number: PCT/US2006/001731
(87) International publication number: WO 2006/081112

(56) References cited:
- US-A1- 2004 164 619
- US-B1- 6 496 103
- "Power over Ethernet: Cisco Inline Power and IEEE 802.3af" [Online] 2004, CISCO SYSTEMS , XP002383688 Retrieved from the Internet: URL:http://www.cisco.com/warp/public/cc/so /neso/bbssp/poeie_wp.pdf> [retrieved on 2006-05-31] page 3 - page 7
- "IEEE Std 802.3af - 2003" 18 June 2003 (2003-06-18), IEEE , NEW YORK, USA , XP002383689 Retrieved from the Internet: URL:www.ieee.org> [retrieved on 2006-05-31] page 40, paragraph 33.2.7 - page 41; table 33.4 page 56, paragraph 33.3.6

## Description

### Technical Field

This disclosure relates to power supply systems, and more particularly, to a circuitry and methodology for providing data communications between a power supply device and a powered device supplied with power over a communication link.

### Background Art

Over the years, Ethernet has become the most commonly used method for local area networking. The IEEE 802.3 group, the originator of the Ethernet standard, has developed an extension to the standard, known as IEEE 802.3af, that defines supplying power over Ethernet cabling. The IEEE 802.3af standard defines a Power over Ethernet (PoE) system that involves delivering power over unshielded twisted-pair wiring from Power Sourcing Equipment (PSE) to a Powered Device (PD) located at opposite sides of a link. Traditionally, network devices such as IP phones, wireless LAN access points, personal computers and Web cameras, have required two connections: one to a LAN and another to a power supply system. The PoE system eliminates the need for additional outlets and wiring to supply power to network devices. Instead, power is supplied over Ethernet cabling used for data transmission.

As defined in the IEEE 802.3af standard, PSE and PD are non-data entities allowing network devices to supply and draw power using the same generic cabling as is used for data transmission. A PSE is the equipment electrically specified at the point of the physical connection to the cabling, that provides the power to a link. A PSE is typically associated with an Ethernet switch, router, hub or other network switching equipment or midspan device. A PD is a device that is either drawing power or requesting power. PDs may be associated with such devices as digital IP telephones, wireless network access points, PDA or notebook computer docking stations, cell phone chargers and HVAC thermostats.

PSE's main functions are to search the link for a PD requesting power, optionally classify the PD, supply power to the link if a PD is detected, monitor the power on the link, and disconnect power when it is no longer requested or required. A PD participates in the PD detection procedure by presenting a valid or non-valid detection signature to request power and indicate that power has been received. The PD detection signature has electrical characteristics measured by the PSE.

Traditional data transmission over Ethernet is carried out between the Ethernet twisted pairs in a differential mode, where one pair is used for transmitting data from a first node to a second node, and the other pair is used for receiving data sent from the second node to the first node. In a PoE system, power between a PSE and a PD is transmitted in a common mode as a voltage between two of the Ethernet twisted pairs, typically by powering the center-taps of the isolation transformers used to couple the Ethernet data signals to the wire. Since Ethernet data are sent differentially, the power transmitted in a common mode between the Ethernet transmit pairs and receive pairs does not affect the Ethernet data transmitted in a differential mode.

Although PSE and PD are non-data entities, which are not involved in transmission of Ethernet data, it may be desirable to communicate information between the PSE and the PD. For example, it may be desirable for a PD to request a level of power greater than the power level allowed by the original IEEE 802.3af specification that gives a PD an option of presenting a classification signature to the PSE to indicate how much power it will draw when powered up. A PD may be classified as class 0 to class 4. A PD of class 1 requires that the PSE supplies at least 4.0W, a PD of class 2 requires that the PSE supplies at least 7.0W, and a PD of class 0, 3 or 4 requires at least 15.4W. Based on the determined class of the PD, the PSE applies the required power to the PD.

Currently, a PD has no ability to communicate with a PSE beyond this classification protocol. Therefore, there is a need for a communication scheme to support an information exchange between the PSE and the PD.

US 2004/0164619 A1 discloses a connector module, particularly an Ethernet jack module, with embedded Power-over-Ethernet functionality.

The article "Power over Ethernet: Cisco Inline Power and IEEE 802.3af", Important Notices and Privacy Statement from Cisco Systems, 2004, discloses a review concerning Power over Ethernet (PoE) Delivery to power capable devices using Cisco Inline Power and the IEEE 802.3af standard, respectively. In particular, the article discloses a Cisco Discovery Protocol that involves receiving a Cisco Protocol Discovery message from a powered device that informs the PSE of the actual power required by the device. If the power is less than a default value of 15.4W, the PSE will acknowledge the request with its available power and modify the PSEs power budget. If the requesting powered device exceeds the power budget, the port will be either powered down, or the port will remain in low power mode (7W).

US 6,496,103 B1 discloses a device, system and method for providing power in a secure manner to a device connected to a network, such as an Ethernet network. An intelligent power supply may be able to interrogate the network device before power is supplied, in order to determine the electrical capabilities of the device and/or whether the device is authorized to be connected to the network. Such an intelligent power supply preferably communicates with a low power communication device at each network device, which supplies the necessary information upon request.

"IEEE Std 802.3af-2003", IEEE, New York, USA, 18 June 2003, discloses the IEEE Standard for Information technology as already discussed above.

### Summary of the Disclosure

The present disclosure offers novel circuitry and methodology for providing data communication between a power supply device and a powered device in a system for supplying power over a communication link.

The invention is defined by claims 1, 18 and 23, with various embodiments as presented in the dependent claims.

The power supply device, such as a device for supplying power over Ethernet, may comprise detection circuitry for detecting an event associated with presenting the additional information from the powered device. In particular, the detection circuitry may detect a predefined electrical parameter of the powered device corresponding to the additional information.

In accordance with an embodiment of the present disclosure, the detection circuitry may detect a predefined amount of current drawn by the powered device in response to a predefined event and/or for a predefined time period to present the additional information.

For example, the powered device may be configured to draw the predefined amount of current in response to applying power from the power supply device.

The power supply device may comprise an acknowledgement event generator for producing an acknowledgement event to acknowledge receipt of the additional information presented by the powered device. The power supply device may modify a power supply signal applied to the powered device to create the acknowledgement event.

In accordance with an embodiment of the disclosure, a power supply voltage applied to the powered device may be reduced to a predefined level for a predefined period of time to acknowledge receipt of the additional information.

The detection circuitry may detect a further event corresponding to the additional information presented by the powered device after the acknowledgement event is produced. This further event may be accompanied by an attention event created by the powered device before presenting the additional information. An attention event detector may be provided in the power supply device for detecting the attention event.

In accordance with an embodiment of the disclosure, the attention event detector may detect an overcurrent condition corresponding to the attention event.

The power supply device may be configured for presenting information to the powered device. For example, the power supply device may reduce a power supply voltage applied to the powered device to a predefined level for a predefined time period to present information to the powered device.

In accordance with another aspect of the disclosure, a powered device for receiving power supplied from a power supply device over Ethernet may be configured for providing the power supply device with information presented in addition to the detection and classification information.

The powered device may have a source of information configured to present a prescribed electrical parameter as the additional information.

In accordance with an embodiment of the disclosure, the source of information may enable the powered device to draw a predefined amount of current for a predefined time period. The predefined amount of current may be drawn in response to supplying power from the power supply device.

An attention event generator may be provided in the powered device for providing the power supply device with an attention event before presenting the additional information.

According to an example, a power supply device in a PoE system is configured for receiving from the powered device detection information for detecting the powered device and classification information for determining a power level of the powered device in accordance with IEEE 802.3af standard. Information circuitry is provided for handling additional information presented by the powered device in addition to the detection and classification information in accordance with the IEEE 802.3af standard.

The information circuitry may obtain a power requirement information from the PD.

As an example, the following steps may be carried out:
- detecting a powered device coupled to the communication link,
- detecting a power requirement of the detected powered device,
- providing power to the powered device and
- detecting information presented by the powered device after the power requirement is detected.

A local area network (LAN) comprises a plurality of nodes, a network hub and communication cabling connecting the nodes to the network hub for providing data communications. The network hub includes a power supply device for supplying power over the communication cabling to a load. The power supply device is configured for detecting information presented by the load in addition to information relating to detecting the load and detecting a power requirement of the load.

Additional advantages and aspects of the disclosure will become readily apparent to those skilled in the art from the following detailed description, wherein embodiments of the present disclosure are shown and described, simply by way of illustration of the best mode contemplated for practicing the present disclosure. As will be described, the disclosure is capable of other and different embodiments, and its several details are susceptible of modification in various obvious respects. Accordingly, the drawings and description are to be regarded as illustrative in nature, and not as limitative.

### Brief Description of the Drawings

The following detailed description of the embodiments of the present disclosure can best be understood when read in conjunction with the following drawings, in which the features are not necessarily drawn to scale but rather are drawn as to best illustrate the pertinent features, wherein:
FIG. 1 is a diagram illustrating a Power over Ethernet system of the present disclosure.
FIG. 2 is a diagram illustrating an exemplary arrangement of circuitry for supporting data communications between power sourcing equipment and a powered device.
FIG. 3 is a flow chart illustrating an exemplary procedure for carrying out data communications between the power sourcing equipment and the powered device.

### Detailed Disclosure of the Embodiments

The present disclosure will be made using the example of a Power over Ethernet (PoE) system. It will become apparent, however, that the concepts described herein are applicable to any system for supplying power over a communication link. For example, the system of the present disclosure may be utilized for providing communications between a power supply device and a load in a local area network (LAN) having a plurality of nodes, a network hub and communication cabling connecting the nodes to the network hub for providing data communications. The network hub may include the power supply device, and the communication cabling may be utilized for supplying power from the power supply device to the load.

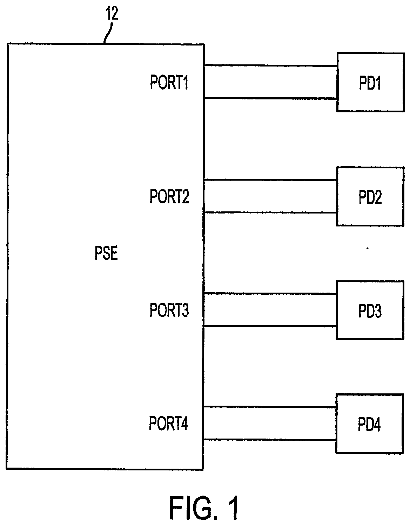

FIG. 1 shows a simplified block-diagram illustrating a PoE system 10 including Power Sourcing Equipment (PSE) 12 having multiple ports 1 to 4 connectable to Powered Devices (PD) 1 to 4 via respective links, each of which may be provided using 2 or 4 sets of twisted pairs within the Ethernet cable. Although FIG. 1 shows four ports of the PSE 12, one skilled in the art would realize that any number of ports may be provided.

The PSE 12 may interact with each PD in accordance with the IEEE 802.3af standard. In particular, the PSE 12 and the PD participate in the PD detection procedure, during which the PSE 12 probes a link to detect the PD. If the PD is detected, the PSE 12 checks the PD detection signature to determine whether it is valid or non-valid. The valid and non-valid detection signatures are defined in the IEEE 802.3af standard. While the valid PD detection signature indicates that the PD is in a state where it will accept power, the non-valid PD detection signature indicates that the PD is in a state where it will not accept power.

If the signature is valid, the PD has an option of presenting a classification signature to the PSE to indicate how much power it will draw when powered up. For example, a PD may be classified as class 0 to class 4. A PD of class 1 requires that the PSE supplies at least 4.0W, a PD of class 2 requires that the PSE supplies at least 7.0W, and a PD of class 0, 3 or 4 requires at least 15.4W. Based on the determined class of the PD, the PSE applies the required power to the PD.

PSE and PD are non-data entities, which are not involved in transmission of Ethernet data. However, it may be desirable to communicate information between the PSE and the PD. For example, a PD may need to request a special operating power level different from the standard IEEE 802.3af levels, or a power supply system may involve transmitting to a PSE a system serial number that uniquely identifies the PD.

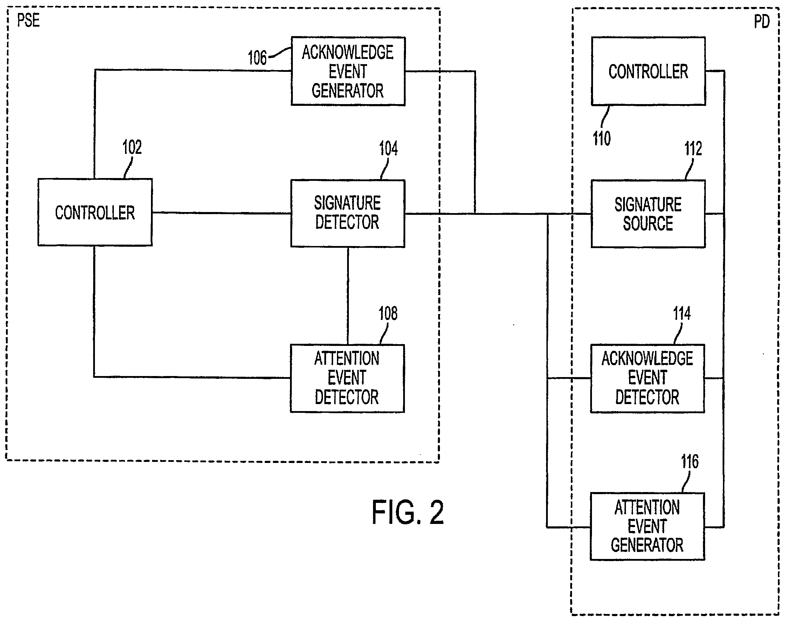

In accordance with an exemplary embodiment of the present disclosure, the PoE system 10 may utilize a predefined third signature presented by a PD after detection and classification signatures for conveying additional information from the respective PD to the PSE 12. In particular, as shown in FIG. 2, the PSE 12 may include a controller 102 for controlling PSE operations supporting a data exchange with the PD, a signature detector 104 for detecting a predefined signature used for conveying PD information presented to the PSE, an acknowledgement event generator 106 for producing an event acknowledging the receipt of the PD signature, and an attention event detector 108 for detecting an attention event produced by the PD to direct the attention of the PSE 12 to a signature presented thereafter.

A PD capable of presenting the third signature to the PSE 12 may include a controller 110 for controlling PD operations supporting a data exchange with the PSE 12, a signature source 112 that originates a predefined signature used for presenting information to the PSE 12, an acknowledgement event detector 114 for detecting the acknowledgement event produced by the PSE 12, and an attention event generator 116 for producing the attention event detectable by the PSE 12. One skilled in the art would realize that the elements of the PSE and PD shown in FIG. 2 are presented only to illustrate the concept of the present disclosure and may be implemented in a number of different ways.

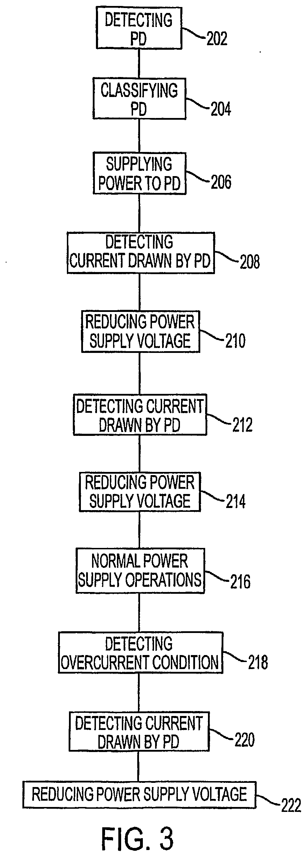

Referencing to FIG. 3 that illustrates data exchange operations in accordance with an exemplary embodiment of the present disclosure, the PSE 12 may probe a PoE link to detect a PD connected to that link (block 202). If the PD is detected, the PSE 12 checks the PD detection signature to determine whether it is valid or non-valid. If the signature is valid, the PD may present a classification signature to indicate how much power it will draw when powered up. The PD may present a signature corresponding to any one of classes 0 to 4, which any PSE would recognize. For example, a class 4 signature may be presented. The PSE performs a classification procedure to detect the classification signature and determine to which class the PD belongs (block 204). The detection and classification procedures may be performed in accordance with the IEEE 802.3af specification.

Thereafter, the PSE 12 may apply a 48V power supply voltage to the PD to provide it with the requested power (block 206). In response to the power supply voltage, the PD may present the third signature in any way that carries information that the PD wants to communicate to the PSE. This information may request, for example, a special operating power level different from the standard IEEE 802.3af levels, or present a system serial number that uniquely identifies the PD. The third signature may be produced by the signature source 112 of the PD and detected by the signature detector 104 of the PSE. Although the present disclosure describes that the third signature is presented in response to supplying power to the PD, one skilled in the art would realize that the third signature may be presented before power is applied to the PD or after a certain period of time after power is provided.

In accordance with an exemplary embodiment of the disclosure, when the PD is provided with a 48V power supply voltage, the signature source 112 presents the third signature by drawing a predefined amount of current for a predefined time period, e.g., for 100 ms. The amount of the drawn current may represent a particular information to be presented. For example, the signature source 112 may include a current source controlled by the controller 110 to draw the predefined current for a predefined time period. Alternatively, the third signature may be presented by a PD as a particular resistance, voltage, or a power load for a defined period of time and/or in response to a defined electrical stimulus. Also, the third signature may be applied as a data stream transmitted on a common-mode or a differential-mode channel of the PoE system.

The third signature may consist of a single piece or bit of information or may include multiple pieces or bits created by modulating the respective parameter of the PD. For example, the amount of current drawn by the PD may be modulated to represent multiple bits of information.

The third signature is detected by a PSE designed to recognize additional information represented by the third signature (block 208). The signature detector 104 of the PSE may be configured to detect any PD's characteristic utilized as the third signature. For example, the signature detector 104 may include a current sensor and a timer for detecting the predefined current drawn by the PD for the predefined period of time. The signature detector 104 may be controlled by the controller 102 to observe current drawn when a 48V power supply voltage is applied by the PSE.

The signature detector 104 may utilize a regular current sensing mechanism of a PSE that includes a sense resistor connected in series to a power line. Any impedance circuitry, e.g. a diode circuit, may be utilized instead of the sense resistor.

If the signature detector 104 detects the predefined signature, it may send a respective signal to the controller 102 that decodes the information represented by the third signature. Alternatively, the controller 102 may analyze the current measured by the signature detector 104 to determine whether the third signature is received and to decode the presented information.

When the third signature is detected, the controller 102 may control the acknowledgement event generator 106 to produce a predefined acknowledgement event confirming the receipt of information from the PD. Also, the acknowledgement event may be used by the controller to accept or deny a request made by the PD. The acknowledgement event may be any event recognizable by the PD. For example, the acknowledgement event generator 106 may reduce a 48V power supply voltage applied by the PSE to a lower level for a predefined time period and then restore the power supply voltage to a full 48V level (block 210). For instance, to acknowledge the receipt of information from the PD, the 48V power supply voltage may be reduced to a level lower than 30V for 10ms.

Alternatively, an acknowledgement event may be produced using any other characteristic of the PSE, for example, by interrupting or modifying power supplied to the PD for a predefined period of time or by altering the timing of the power supply. Also, an acknowledgement event may be made by sending a data stream back to the PD either via a common-mode or a differential-mode channel of the PoE system.

If a predefined third signature is not detected by the PSE, it assumes that a conventional, 802.3af standard complying PD is connected to its port. Therefore, the PSE will continue operations prescribed by the 802.3af standard.

The acknowledgement event may be detected by the acknowledgement event detector 114 of the PD capable of recognizing a predefined acknowledgement event. For example, the acknowledgement event detector 114 may include a voltage detector and a timer to detect the reduction of power supply voltage to a predefined level for a predefined time period.

If a predefined acknowledgement event is not detected by the PD, it may repeat the third signature after a predetermined time period. If no acknowledgement is still received, the PD may assume that the PSE is not able to recognize the predefined signature. Therefore, the PD will continue operations prescribed by the 802.3af standard.

Based on the acknowledgement event or its absense, the PD may provide a communication to the end user, for example, to indicate that the PD is capable to modify its behavior. This communication may be carried out as a visual or audio feedback to the user, or a data transmission to the host system.

In response to the acknowledgement event, the PD may initiate another data communication session with the PSE, for example, to present another piece of information or to provide robustness of the data communication system. The data communication session may be handled in the same manner as the initial session or in a different manner. For example, the PD may draw a predefined amount of current for a predefined time period (block 212), where the amount of current may represent the information being presented. Alternatively, the information may be presented as another predefined characteristic of the PD, such as a particular resistance, voltage, or a power load; or as a data stream transmitted to the PSE via a common-mode or differential-mode channel of the PoE.

The PSE may respond to the presented information by providing an acknowledgement event, for example, by reducing a power supply voltage to a predefined level for a predefined period of time (block 214).

During a normal power supply operation (block 216), when a requested power is supplied from the PSE to the PD, the PD is still may be able to communicate information to the PSE. For example, if the PD changes its power requirement, it may present the respective request to the PSE.

To direct the PSE's attention to the information to be presented, the attention event generator 116 of the PD may produce an attention event detectable by the PSE. For example, the PD may create a short-term overcurrent condition by drawing an amount of power exceeding an allowed limit for a short period of time, e.g. for 10ms.

The attention event detector 108 of the PSE may detect the attention event and indicate to the controller 102 that new information is going to be presented by the PD (block 218). For example, the attention event detector 108 may be triggered by the current sensing mechanism of the PSE when the overload current is detected. The attention event detector 108 may use a timer to determine the duration of the detected overcurrent condition. If the duration of the overcurrent condition corresponds to the time period defined for attention events, the attention event detector 108 indicates that the overcurrent condition represents the attention event to be followed by information presented by the PD. The overcurrent condition does not exceed the overload time limit established by the IEEE 802.3af standard, to prevent the PSE from removing power in response to the overcurrent condition.

After presenting the attention event, the PD may present new information to the PSE, for example, by drawing a predefined amount of current for a predefined time period. When the PSE detects new information (block 220), it may produce an acknowledgement event to acknowledge the receipt of the new information, for example, by reducing a power supply voltage to a predefined level for a predefined time period (block 222). This data exchange may be repeated every time when the PD needs to present information to the PSE.

Similarly, during a normal power supply operation, the PSE may be able to communicate to the PD. For example, the PSE may request the PD to limit its power consumption when the amount of power available from the PSE is limited. When more power becomes available, the PSE may suggest the PD to return to a higher power consumption mode.

The PSE may present its information to the PD by modifying any of its parameters. For example, it may reduce a power supply voltage to a predefined level for a predefined amount of time. The reduced level of the power supply voltage may represent the information being presented. The PD may acknowledge the receipt of the information from the PSE by modifying any of its parameters. For example, the PD may produce an acknowledgement event by drawing a predefined amount of current for a predefined time period.

The foregoing description illustrates and describes aspects of the present invention. Additionally, the disclosure shows and describes only preferred embodiments, but as aforementioned, it is to be understood that the invention is capable of use in various other combinations, modifications, and environments and is capable of changes or modifications within the scope of the inventive concept as expressed herein, commensurate with the above teachings, and/or the skill or knowledge of the relevant art.

For example, the present disclosure discloses presenting information by a PD in response to a power supply voltage from a PSE after the detection and classification procedures are completed. However, the PD's information may be presented before the PSE applies a power supply voltage to the PD. In particular, the PD may present information by modifying its detection and/or classification signatures defined by the IEEE 802.3 af standard so as to keep these signatures valid. For example, the PD may perform time and/or amplitude modulation of the class current presented during the classification interval so as to maintain the class current within the valid range for the respective class. For instance, an IEEE 802.3af-compliant class 3 PD must maintain a current between 26mA and 30mA for the duration of the class test. Therefore, the PD may rapidly switch the current between, for example, 27mA and 29mA to present additional information to the PSE capable of recognizing this information. In this case, the PS will remain a valid IEEE 802.3af-compliant class 3 PD.

The embodiments described hereinabove are further intended to explain best modes known of practicing the invention and to enable, others skilled in the art to utilize the invention in such, or other, embodiments and with the various modifications required by the particular applications or uses of the invention.

Accordingly, the description is not intended to limit the invention to the form disclosed herein.

## Claims

1. A system for supplying power over a communication link, comprising:
- a power supply device (PSE) for providing power to a powered device (PD) via the communication link, said power supply device (PSE) being configured for receiving from the powered device (PD) over the communication link detection information for detecting the powered device (PD) and classification information for determining a power level of the powered device (PD) and for supplying power to the powered device (PD) according to characteristics associated with the classification information,
**characterized in that** the power supply device (PSE) comprises:
- information circuitry (104, 108) being configured to detect additional information presented by the powered device (PD) over the communication link after the detection and classification information is presented and to handle the detected additional information after the powered device (PD) is powered by the power supply device (PSE).

2. The system of claim 1, wherein the power supply device (PSE) is configured for providing power to the powered device (PD) over Ethernet.

3. The system of claim 1, wherein the power supply device (PSE) comprises detection circuitry (108) for detecting an event associated with presenting the additional information from the powered device (PD).

4. The system of claim 3, wherein the detection circuitry (108) is configured to detect a predefined electrical parameter of the powered device (PD) corresponding to the additional information.

5. The system of claim 4, wherein the detection circuitry (108) is configured to detect a predefined amount of current drawn by the powered device (PD) to present the additional information.

6. The system of claim 4, wherein the detection circuitry (108) is configured to detect a predefined amount of current being drawn by the powered device (PD) in response to the powered device (PD) being provided power from the power supply device (PSE).

7. The system of claim 3, wherein the power supply device (PSE) comprises an acknowledgement event generator (106) for producing an acknowledgement event to acknowledge receipt of the additional information presented by the powered device (PD).

8. The system of claim 7, wherein the power supply device (PSE) is configured to modify a power supply signal applied to the powered device (PD) to acknowledge receipt of the additional information.

9. The system of claim 8, wherein the power supply device (PSE) is configured to reduce a power supply voltage applied to the powered device (PD) to acknowledge receipt of the additional information.

10. The system of claim 7, wherein the detection circuitry (104) is configured for detecting a further event corresponding to the additional information presented by the powered device (PD) after the acknowledgement event is produced.

11. The system of claim 1, wherein the power supply device (PSE) comprises an attention event detector (108) for detecting an attention event provided by the powered device (PD) before presenting the additional information.

12. The system of claim 11, wherein the attention event is an overcurrent condition, and the attention event detector (108) is configured to detect the overcurrent condition.

13. The system of claim 1, wherein
the power supply device (PSE) is configured for providing a predefined acknowledgement signal applied to and recognizable by the powered device (PD), to acknowledge receipt of the information presented by the powered device (PD), the predefined acknowledgement signal being asserted by reducing power supply voltage provided by the power supply device (PSE).

14. The system of claim 13, wherein the detection circuitry (104) is configured for detecting a predefined amount of current drawn by the powered device (PD) to present the additional information.

15. The system of claim 14, wherein the predefined amount of current is drawn by the powered device (PD) in response to the powered device being supplied power from the power supply device (PSE).

16. The system of claim 13, wherein the power supply device (PSE) further comprising circuitry for presenting information to the powered device (PD).

17. The system of any one of claims 1 to 16, further comprising:
a network hub that includes the power supply device (PSE), wherein the network hub is a network hub of a local area network (LAN) having: a plurality of nodes, and communication cabling connecting the nodes to the network hub for providing data communications.

18. A powered device (PD) for receiving power supplied from a power supply device (PSE) over a communication link, the powered device (PD) being configured for providing the power supply device (PSE) with detection and classification information according to IEEE 802.3af standard over the communication link, wherein the detection and classification information are presented to enable the power supply device (PSE) to detect and classify the powered device (PD),
**characterized in that**
the powered device (PD) comprises information circuitry (112) for presenting, over the communication link, additional information to the power supply device (PSE) after the detection and classification information is provided, the information circuitry (112) being configured for presenting the additional information after the powered device (PD) is powered by the power supply device (PSE).

19. The powered device (PD) of claim 18, comprising a source of information (112) configured to present a prescribed electrical parameter as the additional information.

20. The powered device (PD) of claim 19, wherein the source of information (112) is configured to draw a predefined amount of current from the power received from the power supply device (PSE).

21. The powered device (PD) of claim 19, wherein the predefined amount of current is drawn in response to receiving the power from the power supply device (PSE).

22. The powered device (PD) of claim 19, further comprising an attention event generator (116) for providing the power supply device (PSE) with an attention event before presenting the additional information.

23. A method of supplying power from a power supply device (PSE) over a communication link, comprising the steps of:
- detecting, by the power supply device (PSE) over the communication link, a powered device (PD) coupled to the communication link,
- detecting, by the power supply device (PSE) over the communication link, a power requirement of the detected powered device (PD), and
- providing power, by the power supply device (PSE) over the communication link, to the powered device (PD),
**characterized in that** the method further comprises the step of:
- detecting, by the power supply device (PSE) over the communication link, information presented by the powered device (PD) after the powered device (PD) is powered.

24. The method of claim 23, wherein the step of detecting information comprises detecting a predefined electrical characteristic of the powered device (PD).

25. The method of claim 24, wherein the step of detecting information comprises detecting a predefined amount of current drawn by the powered device (PD).

26. The method of claim 23, further comprising a step of acknowledging the detected information by the power supply device (PSE).

27. The method of claim 23, further comprising a step of detecting, by the power supply device (PSE), an attention event provided by the powered device (PD) before presenting the information.

28. The method of claim 27, wherein the attention event includes an overcurrent condition provided for a predefined period of time.

## Patentansprüche

1. Ein System zur Energieversorgung über eine Kommunikationsverbindung, die Folgendes umfasst:
- eine Energieversorgungseinrichtung (PSE) zum Liefern von Energie an ein gespeistes Gerät bzw. einen *Powered Device* (PD) über die Kommunikationsverbindung, wobei die genannte Energieversorgungseinrichtung (PSE) so konfiguriert ist, dass sie vom *Powered Device* (PD) über die Kommunikationsverbindung Detektions-Informationen zum Detektieren des *Powered Device* (PD) und Klassifizierungsinformationen zum Bestimmen eines Leistungspegels des *Powered Device* (PD) empfängt und dass sie gemäß den mit der Klassifizierungsinformation verbundenen Merkmalen Energie an den *Powered Device* (PD) liefert,
**dadurch gekennzeichnet, dass** die Energieversorgungseinrichtung (PSE) Folgendes umfasst:
- Informationsschaltungsanordnung (104, 108), die so konfiguriert ist, dass sie zusätzliche Informationen detektiert, die vom *Powered Device* (PD) über die Kommunikationsverbindung präsentiert werden, nachdem die Detektions- und Klassifizierungsinformationen präsentiert wurden, und die erkannten zusätzlichen Informationen verarbeitet, nachdem der *Powered Device* (PD) von der Energieversorgungseinrichtung (PSE) gespeist wurde.

2. Das System nach Anspruch 1, wobei die Energieversorgungseinrichtung (PSE) so konfiguriert ist, dass sie den *Powered Device* (PD) über Ethernet mit Energie versorgt.

3. Das System nach Anspruch 1, wobei die Energieversorgungseinrichtung (PSE) eine Detektionsschaltungsanordnung (108) umfasst, um ein Ereignis, das mit dem Präsentieren der zusätzlichen Informationen aus dem *Powered Device* (PD) verbunden ist, zu detektieren.

4. Das System nach Anspruch 3, wobei die DetektionsSchaltungsanordnung (108) so konfiguriert ist, dass sie einen vordefinierten elektrischen Parameter des *Powered Device* (PD) detektiert, der den zusätzlichen Informationen entspricht.

5. Das System nach Anspruch 4, wobei die DetektionsSchaltungsanordnung (108) so konfiguriert ist, dass sie eine vordefinierte Strommenge detektiert, die vom *Powered Device* (PD) gezogen wird, um die zusätzlichen Informationen zu präsentieren.

6. Das System nach Anspruch 4, wobei die DetektionsSchaltungsanordnung (108) so konfiguriert ist, dass sie eine vordefinierte Strommenge detektiert, die vom *Powered Device* (PD) gezogen wird, als Reaktion darauf, dass der *Powered Device* (PD) von der Energieversorgungseinrichtung (PSE) mit Strom versorgt wird.

7. Das System nach Anspruch 3, wobei die Energieversorgungseinrichtung (PSE) einen Bestätigungsereignis-Generator (106) umfasst, zum Erzeugen eines Bestätigungsereignisses, das den Empfang der vom *Powered Device* (PD) präsentierten Zusatzinformationen bestätigt.

8. Das System nach Anspruch 7, wobei die Energieversorgungseinrichtung (PSE) dazu konfiguriert ist, ein am *Powered Device* (PD) angelegtes Energieversorgungssignal zu modifizieren, um den Empfang der zusätzlichen Informationen zu bestätigen.

9. Das System nach Anspruch 8, wobei die Energieversorgungseinrichtung (PSE) so konfiguriert ist, dass sie eine am *Powered Device* (PD) angelegte Energieversorgungs-Spannung reduziert, um den Empfang der zusätzlichen Informationen zu bestätigen.

10. Das System nach Anspruch 7, wobei die DetektionsSchaltungsanordnung (104) konfiguriert ist, zum Detektieren eines weiteren Ereignisses, das den zusätzlichen Informationen entspricht, die vom *Powered Device* (PD) nach dem Bestätigungsereignis präsentiert werden.

11. Das System nach Anspruch 1, wobei die Energieversorgungseinrichtung (PSE) einen Attention-Ereignis-Detektor (108) umfasst, um ein vom *Powered Device* (PD) bereitgestelltes *Attention-*Ereignis zu detektieren, bevor die zusätzlichen Informationen präsentiert werden.

12. Das System nach Anspruch 11, wobei das *Attention-*Ereignis eine Überstrombedingung ist und der Attention-Ereignis-Detektor (108) konfiguriert ist, um die Überstrombedingung zu detektieren.

13. Das System nach Anspruch 1, wobei die Energieversorgungseinrichtung (PSE) so konfiguriert ist, dass sie ein vordefiniertes Bestätigungssignal bereitstellt, das an den *Powered Device* (PD) angelegt und von diesem erkennbar ist, um den Empfang der vom *Powered Device* (PD) präsentierten Informationen zu bestätigen, wobei das vordefinierte Bestätigungssignal durch Reduzierung der von der Energieversorgungseinrichtung (PSE) gelieferten Energieversorgungs-Spannung vorgebracht wird.

14. Das System nach Anspruch 13, wobei die DetektionsSchaltungsanordnung (104) so konfiguriert ist, dass sie eine vordefinierte Strommenge detektiert, die vom *Powered Device* (PD) gezogen wird, um die zusätzlichen Informationen zu präsentieren.

15. Das System nach Anspruch 14, wobei die vordefinierte Strommenge vom *Powered Device* (PD) gezogen wird als Reaktion auf die Energieversorgung des *Powered Device* durch die Energieversorgungseinrichtung (PSE).

16. Das System nach Anspruch 13, wobei die Energieversorgungseinrichtung (PSE) ferner eine Schaltungsanordnung umfasst, um dem *Powered Device* (PD) Informationen zu präsentieren.

17. Das System nach irgendeinem der Ansprüche von 1 bis 16, das ferner Folgendes umfass:
einen Netzwerk-Hub, der die Energieversorgungseinrichtung (PSE) enthält, wobei der Netzwerk-Hub ein Netzwerk-Hub eines lokalen Netzwerks (LAN) ist, der Folgendes aufweist: einer Vielzahl von Knoten und eine Kommunikationsverkabelung, die die Knoten mit dem Netzwerk-Hub verbindet, um Datenkommunikation bereitzustellen.

18. Ein gespeistes Gerät bzw. *Powered Device* (PD) zum Empfangen von Energie, die von einer Energieversorgungseinrichtung (PSE) über eine Kommunikationsverbindung bereitgestellt wird, wobei der *Powered Device* (PD) konfiguriert ist, um der Energieversorgungseinrichtung (PSE) über die Kommunikationsverbindung Detektions- und Klassifizierungsinformationen gemäß dem IEEE 802.3af-Standard bereitzustellen, wobei die Detektions- und Klassifizierungsinformationen präsentiert werden, damit die Energieversorgungseinrichtung (PSE) den *Powered Device* (PD) erkennen und klassifizieren kann,
**dadurch gekennzeichnet, dass**
der *Powered Device* (PD) eine Informations-Schaltungsanordnung (112) umfasst, um der Energieversorgungseinrichtung (PSE) über die Kommunikationsverbindung zusätzliche Informationen zu präsentieren, nachdem die Detektions- und Klassifizierungsinformationen bereitgestellt wurden, wobei die Informations-Schaltungsanordnung (112) konfiguriert ist, um die zusätzlichen Informationen zu präsentieren, nachdem der *Powered Device* (PD) von der Energieversorgungseinrichtung (PSE) versorgt wurde.

19. Der *Powered Device* (PD) nach Anspruch 18, umfassend eine Informationsquelle (112), die konfiguriert ist, um einen vorgeschriebenen elektrischen Parameter als Zusatzinformation zu präsentieren.

20. Der *Powered Device* (PD) nach Anspruch 19, wobei die Informationsquelle (112) konfiguriert ist, um eine vorbestimmte Menge Strom aus der von der Energieversorgungseinrichtung (PSE) empfangenen Energie zu ziehen.

21. Der *Powered Device* (PD) nach Anspruch 19, wobei die vordefinierte Strommenge als Reaktion auf den Empfang der Energie von der Energieversorgungseinrichtung (PSE) gezogen wird.

22. Der *Powered Device* (PD) nach Anspruch 19, ferner umfassend einen Attention-Ereignis-Generator (116) zum Versorgen der Energieversorgungseinrichtung (PSE) mit einem *Attention-*Ereignis, bevor die zusätzlichen Informationen präsentiert werden.

23. Ein Verfahren zur Energieversorgung ausgehend von einer Energieversorgungseinrichtung (PSE) über eine Kommunikationsverbindung, das die folgenden Schritte umfasst:
- Detektieren, durch die Energieversorgungseinrichtung (PSE) über die Kommunikationsverbindung, eines mit der Kommunikationsverbindung gekoppelten *Powered Device* (PD),
- Detektieren, durch die Energieversorgungseinrichtung (PSE) über die Kommunikationsverbindung, eines Energiebedarfs des detektierten *Powered Device* (PD) und
- Bereitstellen von Energie durch die Energieversorgungseinrichtung (PSE) über die Kommunikationsverbindung für den *Powered Device* (PD),
**dadurch gekennzeichnet, dass** das Verfahren ferner den Folgenden Schritt umfasst:
- Detektieren, durch die Energieversorgungseinrichtung (PSE) über die Kommunikationsverbindung, von Informationen, die vom *Powered Device* (PD) präsentiert werden nachdem der *Powered Device* (PD) mit Energie versorgt wurde.

24. Das Verfahren nach Anspruch 23, wobei der Schritt des Detektierens von Informationen das Detektieren einer vordefinierten elektrischen Eigenschaft des *Powered Device* (PD) umfasst.

25. Das Verfahren nach Anspruch 24, wobei der Schritt des Detektierens von Informationen das Detektieren einer vordefinierten Strommenge umfasst, die vom *Powered Device* (PD) gezogen wird.

26. Das Verfahren nach Anspruch 23, ferner umfassend einen Schritt des Bestätigens der detektierten Informationen durch die Energieversorgungseinrichtung (PSE).

27. Das Verfahren nach Anspruch 23, ferner umfassend einen Schritt des Detektierens, durch die Energieversorgungseinrichtung (PSE), eines vom *Powered Device* (PD) bereitgestellten *Attention*-Ereignisses, bevor die Informationen präsentiert werden.

28. Das Verfahren nach Anspruch 27, wobei das *Attention-*Ereignis eine Überstrombedingung umfasst, die für einen vordefinierten Zeitraum bereitgestellt wird.

## Revendications

1. Un système d'alimentation en énergie par l'intermédiaire d'une liaison de communication, comprenant :
- un dispositif d'alimentation en énergie (PSE) pour fournir de l'énergie à un dispositif alimenté (PD) via la liaison de communication, ledit dispositif d'alimentation en énergie (PSE) étant configuré pour recevoir de la part du dispositif alimenté (PD) par l'intermédiaire de la liaison de communication de l'information de détection afin de détecter le dispositif alimenté (PD) et de l'information de classification pour déterminer un niveau de puissance du dispositif alimenté (PD), et pour fournir de l'énergie au dispositif alimenté (PD) d'après des caractéristiques associées à l'information de classification,
**caractérisé en ce que** le dispositif d'alimentation en énergie (PSE) comprend :
- une circuiterie d'information (104, 108) configurée pour détecter des informations supplémentaires présentées par le dispositif alimenté (PD) par l'intermédiaire de la liaison de communication après la présentation des informations de détection et de classification et pour traiter les informations supplémentaires détectées après que le dispositif alimenté (PD) est alimenté par le dispositif d'alimentation en énergie (PSE).

2. Le système d'après la revendication 1, sachant que le dispositif d'alimentation en énergie (PSE) est configuré pour fournir de l'énergie au dispositif alimenté (PD) via Ethernet.

3. Le système d'après la revendication 1, sachant que le dispositif d'alimentation en énergie (PSE) comprend une circuiterie de détection (108) pour détecter un événement associé à la présentation des informations supplémentaires provenant du dispositif alimenté (PD).

4. Le système d'après la revendication 3, sachant que la circuiterie de détection (108) est configurée pour détecter un paramètre électrique prédéfini du dispositif alimenté (PD) correspondant aux informations supplémentaires.

5. Le système d'après la revendication 4, sachant que la circuiterie de détection (108) est configurée pour détecter une quantité prédéfinie de courant prélevée par le dispositif alimenté (PD) afin de présenter les informations supplémentaires.

6. Le système d'après la revendication 4, sachant que la circuiterie de détection (108) est configurée pour détecter une quantité prédéfinie de courant prélevée par le dispositif alimenté (PD) en réponse à l'alimentation du dispositif alimenté (PD) par le dispositif d'alimentation en énergie (PSE).

7. Le système d'après la revendication 3, sachant que le dispositif d'alimentation en énergie (PSE) comprend un générateur d'événements de confirmation (106) pour produire un événement de confirmation afin de confirmer la réception des informations supplémentaires présentées par le dispositif alimenté (PD).

8. Le système d'après la revendication 7, sachant que le dispositif d'alimentation en énergie (PSE) est configuré pour modifier un signal d'alimentation en énergie appliqué au dispositif alimenté (PD) pour confirmer la réception des informations supplémentaires.

9. Le système d'après la revendication 8, sachant que le dispositif d'alimentation en énergie (PSE) est configuré pour réduire une tension d'alimentation en énergie appliquée au dispositif alimenté (PD) pour confirmer la réception des informations supplémentaires.

10. Le système d'après la revendication 7, sachant que la circuiterie de détection (104) est configurée pour détecter un autre événement correspondant aux informations supplémentaires présentées par le dispositif alimenté (PD) après la production de l'événement de confirmation.

11. Le système d'après la revendication 1, sachant que le dispositif d'alimentation en énergie (PSE) comprend un détecteur d'événement d'attention (108) pour détecter un événement d'attention fourni par le dispositif alimenté (PD) avant de présenter les informations supplémentaires.

12. Le système d'après la revendication 11, sachant que l'événement d'attention est une condition de surcharge de courant, et que le détecteur d'événement d'attention (108) est configuré pour détecter la condition de surcharge de courant.

13. Le système d'après la revendication 1, sachant que le dispositif d'alimentation en énergie (PSE) est configuré pour fournir un signal de confirmation prédéfini appliqué au dispositif alimenté (PD) et reconnaissable par celui-ci, pour confirmer la réception de l'information présentée par le dispositif alimenté (PD), le signal de confirmation prédéfini étant affirmé par la réduction de la tension d'alimentation en énergie fournie par le dispositif d'alimentation en énergie (PSE).

14. Le système d'après la revendication 13, sachant que la circuiterie de détection (104) est configurée pour détecter une quantité prédéfinie de courant prélevée par le dispositif alimenté (PD) afin de présenter les informations supplémentaires.

15. Le système d'après la revendication 14, sachant que la quantité prédéfinie de courant est prélevée par le dispositif alimenté (PD) en réponse à l'alimentation du dispositif alimenté par le dispositif d'alimentation en énergie (PSE).

16. Le système d'après la revendication 13, sachant que le dispositif d'alimentation en énergie (PSE) comprend en outre des circuiteries pour présenter des informations au dispositif alimenté (PD).

17. Le système d'après l'une quelconque des revendications de 1 à 16, comprenant en outre :
un concentrateur de réseau qui inclut le dispositif d'alimentation en énergie (PSE), sachant que le concentrateur de réseau est un concentrateur de réseau d'un réseau local (LAN) présentant : une pluralité de noeuds, et un câblage de communication connectant les noeuds au concentrateur de réseau pour fournir des communications de données.

18. Un dispositif alimenté (PD) pour recevoir de l'énergie fournie par un dispositif d'alimentation en énergie (PSE) par l'intermédiaire d'une liaison de communication, le dispositif alimenté (PD) étant configuré pour fournir au dispositif d'alimentation en énergie (PSE) des informations de détection et de classification d'après la norme IEEE 802.3af par l'intermédiaire de la liaison de communication, sachant que les informations de détection et de classification sont présentées pour permettre au dispositif d'alimentation en énergie (PSE) de détecter et de classifier le dispositif alimenté (PD),
**caractérisé en ce que**
le dispositif alimenté (PD) comprend une circuiterie d'information (112) pour présenter, via la liaison de communication, des informations supplémentaires au dispositif d'alimentation en énergie (PSE) après que les informations de détection et de classification sont fournies, la circuiterie d'information (112) étant configurée pour présenter les informations supplémentaires après que le dispositif alimenté (PD) est alimenté par le dispositif d'alimentation en énergie (PSE).

19. Le dispositif alimenté (PD) d'après la revendication 18, comprenant une source d'information (112) configurée pour présenter un paramètre électrique prescrit comme l'information supplémentaire.

20. Le dispositif alimenté (PD) d'après la revendication 19, sachant que la source d'information (112) est configurée pour prélever une quantité prédéfinie de courant de l'énergie reçue de la part du dispositif d'alimentation en énergie (PSE).

21. Le dispositif alimenté (PD) d'après la revendication 19, sachant que la quantité prédéfinie de courant est prélevée en réponse à la réception de l'énergie provenant du dispositif d'alimentation en énergie (PSE).

22. Le dispositif alimenté (PD) d'après la revendication 19, comprenant en outre un générateur d'événements d'attention (116) pour fournir au dispositif d'alimentation en énergie (PSE) un événement d'attention avant de présenter les informations supplémentaires.

23. Un procédé d'alimentation en énergie à partir d'un dispositif d'alimentation en énergie (PSE) par l'intermédiaire d'une liaison de communication, comprenant les étapes consistant à :
- détecter, par le dispositif d'alimentation en énergie (PSE) via la liaison de communication, un dispositif alimenté (PD) couplé à la liaison de communication,
- détecter, par le dispositif d'alimentation en énergie (PSE) via la liaison de communication, un besoin en énergie du dispositif alimenté détecté (PD), et
- fournir de l'énergie, par le dispositif d'alimentation en énergie (PSE) via la liaison de communication, au dispositif alimenté (PD),
**caractérisé en ce que** le procédé comprend en outre l'étape consistant à :
- détecter, par le dispositif d'alimentation en énergie (PSE) via la liaison de communication, des informations présentées par le dispositif alimenté (PD) après que le dispositif alimenté (PD) est alimenté.

24. Le procédé d'après la revendication 23, sachant que l'étape de détection d'informations comprend la détection d'une caractéristique électrique prédéfinie du dispositif alimenté (PD).

25. Le procédé d'après la revendication 24, sachant que l'étape de détection d'informations comprend la détection d'une quantité prédéfinie de courant prélevée par le dispositif alimenté (PD).

26. Le procédé d'après la revendication 23, comprenant en outre une étape consistant à confirmer des informations détectées par le dispositif d'alimentation en énergie (PSE).

27. Le procédé d'après la revendication 23, comprenant en outre une étape de détection, par le dispositif d'alimentation en énergie (PSE), d'un événement d'attention fourni par le dispositif alimenté (PD) avant de présenter l'information.

28. Le procédé d'après revendication 27, sachant que l'événement d'attention comprend une condition de surcharge de courant prévue pour une période de temps prédéfinie.
